Europäisches Patentamt

European Patent Office

Office européen des brevets

(11) Numéro de publication: **0 341 140 B1**

(12) **FASCICULE DE BREVET EUROPEEN**

(45) Date de publication de fascicule du brevet: **28.07.93**  (51) Int. Cl.$^5$: **G01N 23/14**, G01N 23/06

(21) Numéro de dépôt: **89401207.9**

(22) Date de dépôt: **27.04.89**

(54) **Dispositif de contrôle du taux de dissolution d'un résidu nucléaire dans une solution de dissolveur.**

(30) Priorité: **03.05.88 FR 8805912**

(43) Date de publication de la demande:
**08.11.89 Bulletin 89/45**

(45) Mention de la délivrance du brevet:
**28.07.93 Bulletin 93/30**

(84) Etats contractants désignés:
**DE GB**

(56) Documents cités:
**FR-A- 2 092 864**
**GB-A- 2 088 050**

**PATENT ABSTRACTS OF JAPAN, vol. 7, no. 241 (P-232)[1386], 26 octobre 1983, page 118 P 232; & JP-A-58 129 238**

**INTERNATIONAL JOURNAL OF APPLIED RADIATION AND ISOTOPES, vol. 36, no. 5, mai 1985, pages 405-407, Pergamon Press Ltd, Oxford, GB; T.N. JASSIM et al.: "An improved method for on-line uranium determination in aqueous and organic solution using low energy gamma-ray absorption technique"**

(73) Titulaire: **COMMISSARIAT A L'ENERGIE ATO-MIOUE**
**31/33, rue de la Fédération**
**F-75015 Paris Cédex 15(FR)**

(72) Inventeur: **Bernard, Patrice**
**7 Place des Heliades**
**F-13770 Venelles(FR)**
Inventeur: **Cloue, Jean**
**11 rue des Mûriers**
**F-04100 Manosque(FR)**
Inventeur: **Leperon, Alain**
**La Tuilisse**
**F-04130 Villeneuve(FR)**
Inventeur: **Pasquali, Raymond**
**5, Place d'En Gauch**
**F-04100 Manosque(FR)**
Inventeur: **Bignan, Gilles**
**Chemin du Coton Rouge**
**F-13100 Aix en Provence(FR)**

(74) Mandataire: **Mongrédien, André et al**
**c/o BREVATOME 25, rue de Ponthieu**
**F-75008 Paris (FR)**

**Description**

La présente invention a pour objet un dispositif de contrôle non destructif du taux de dissolution d'un résidu de combustible nucléaire dans un dissolveur.

Les assemblages combustibles de réacteurs nucléaires sont formés d'un faisceau d'aiguilles ou crayons combustibles constitués d'une gaine métallique, par exemple en zirconium, à l'intérieur de laquelle sont disposées des pastilles combustibles. Après irradiation dans le réacteur, les aiguilles combustibles usagées sont retraitées dans une usine de retraitement. Elles sont découpées en tronçons appelés coques. Les pastilles combustibles contenues dans ces coques sont dissoutes dans un dissolveur nitrique en vue de leur retraitement ultérieur. Pour des raisons de sécurité, il est nécessaire de contrôler que le taux de non-dissolution de ces pastilles combustibles est inférieur à une valeur limite fixée par exemple à 20%. Si ce taux est supérieur, la dissolution du combustible est considéré comme insuffisant et il est nécessaire de traiter les coques de manière spécifique.

Selon les procédés de la technique actuellement connus, le contrôle du taux de dissolution du combustible irradié s'effectue par spectrométrie gamma des godets d'une roue de dissolveur contenant un bain nitrique de dissolution. La mesure de l'activité des différents produits de fission permet de calculer la quantité de combustible résiduel non dissous restant dans les coques.

Toutefois, ces procédés, qui reposent sur une mesure passive, ne permettent pas d'atteindre une grande précision de mesure.

La présente invention a précisément pour objet un dispositif permettant de contrôler avec une précision accrue le taux de dissolution d'un résidu nucléaire - notamment de combustible nucléaire - dans une solution de dissolveur.

Le but de la mesure est de vérifier que, lorsque le godet sort du bain nitrique, la dissolution du combustible a été effectuée correctement et qu'il ne reste qu'une fraction de combustile non dissous inférieure au seuil maximal admissible spécifié ci-dessus.

Le principe du procédé mis en oeuvre dans le dispositif de l'invention est basé sur la différence de coefficient d'absorption du rayonnement gamma provenant d'une différence de densité des matériaux. En d'autres termes, la variation de la section transversale d'absorption d'un rayonnement gamma d'énergie comprise entre 0,5 et 1,5 MeV rapportée à l'énergie de ce rayonnement est relativement faible pour un matériau léger, alors que ce rapport est beaucoup plus élevé pour des matériaux lourds.

En conséquence, un nombre n de matériaux présentant des densités différentes auront des coefficients d'absorption différents. L'utilisation succcessive de n sources permet d'obtenir un système d'équation à n inconnues permettant de calculer la masse de chacun des matériaux.

L'application au contrôle du taux de dissolution d'un résidu nucléaire dans un dissolveur est un cas particulier du principe énoncé ci-dessus. Le matériau est en général un oxyde qui ne présente pas la même densité et, par suite, pas le même coefficient d'absorption suivant qu'il se présente sous forme solide ou à l'état dissous. Par conséquent, la mesure des densités des matériaux contenus dans le bain nitrique de dissolution permet de calculer le taux de résidu encore non dissous.

Les étapes à effectuer sont les suivantes :

- on place une première source de rayonnement gamma d'énergie donnée d'un côté du dissolveur et un détecteur de l'autre côté du dissolveur,
- on mesure le taux de comptage sur le détecteur du rayonnement gamma ayant traversé le dissolveur,
- on établit une relation entre le taux de comptage et l'énergie de la source, de manière à obtenir une équation,
- on répète les opérations précédentes n fois pour obtenir un système de n équations comprenant n inconnues, ces inconnues étant les masses de chacun des n matériaux de densités différentes,
- on résout le système de n équations à n inconnues de manière à déterminer les masses de chacun des n matériaux présents dans les résidus nucléaires.

Ce procédé permet seulement de déterminer le taux global de dissolution. Il est souhaitable de connaître en outre la répartition des résidus nucléaires non dissous dans le godet. En effet un taux de dissolution moyen peut cacher une forte hétérogénéité des résidus non dissous.

La présente invention a pour objet un dispositif de contrôle du taux de dissolution qui permet de déterminer la répartition des matières non dissoutes.

De manière plus précise, l'invention concerne un dispositif de contrôle du taux de dissolution d'un résidu nucléaire dans une solution de dissolveur, n matériaux de densités différentes étant mis en solution dans ladite solution, et comprend :

- n sources de rayonnement gamma,
- un détecteur de rayonnement,

2

EP 0 341 140 B1

- un dispositif de collimation pour délimiter un angle solide dans lequel le rayonnement émis par lesdites n sources est perçu par le détecteur,
- des moyens pour traiter le signal émis par le détecteur,
- la solution contenant lesdits n matériaux étant placée entre le détecteur et les sources de rayonnement gamma.

Ces moyens sont connus d'après le brevet GB-A-2 088 050, qui ne concerne cependant pas le contrôle de résidus nucléaires. L'invention est caractérisée par des moyens permettant de déplacer la source selon un maillage de la zone à contrôler.

Ces moyens pour déplacer lesdites n sources de rayonnement gamma sont soit constitués par au moins un tube comportant une partie en spirale placée en regard de la zone à contrôler et déterminant un maillage de cette zone, et des moyens pour faire circuler successivement lesdites sources de rayonnement gamma à une vitesse déterminée et connue dans ladite spirale, soit par un chariot porte-source déplaçable horizontalement et comportant, pour chaque source de rayonnement gamma, un bras porte-source monté sur ledit chariot porte-source et déplaçable verticalement sur ce chariot, lesdites sources de rayonnement radioactives étant montées à une extrémité dudit bras porte-source, des moyens permettant d'actionner le chariot porte-source et chacun des bras porte-source.

D'autres caractéristiques et avantages de l'invention apparaîtront mieux à la lecture de la description non limitative qui suit, faite en regard des dessins annexés, sur lesquels :
- la figure 1 est une vue en perspective d'un premier mode de réalisation d'un dispositif de contrôle du taux de dissolution de combustible comportant des moyens pour assurer la circulation des sources de radiation selon un réseau maillé,
- la figure 2 est une vue en coupe verticale selon le plan II-II du dispositif de contrôle du taux de dissolution représenté sur la figure 1,
- la figure 3 est une vue en coupe horizontale selon la ligne III-III de la figure 2 du dispositif de contrôle du taux de dissolution représenté sur les figures 1 et 2,
- la figure 4 est une vue à échelle agrandie d'une partie de la figure 1 montrant la réalisation des moyens permettant le maillage de la zone à contrôler,
- la figure 5 est une vue en perspective d'un second mode de réalisation d'un dispositif de contrôle du taux de dissolution d'un résidu dans une solution nucléaire,
- la figure 6 illustre le maillage d'un godet du dissolveur au moyen du dispositif de la figure 5.

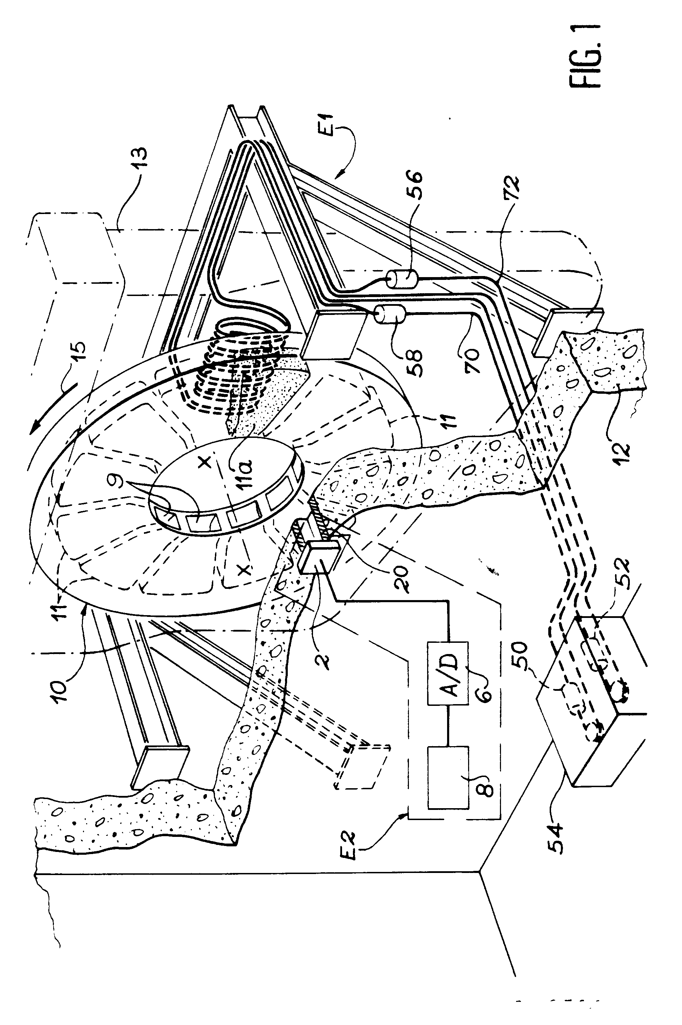

On a représenté sur la figure 1 une vue en perspective d'un mode de réalisation d'un dispositif de contrôle du taux de dissolution de déchets de combustible nucléaire. Le dispositif comprend un ensemble E1 contenant des sources de rayonnement radioactives d'énergies différentes, par exemple des sources de rayonnement gamma, des moyens pour stocker ces sources lorsqu'elles ne sont pas en position d'irradiation et un mécanisme permettant de les déplacer à une vitesse contrôlée bien connue selon un trajet déterminant des mailles dans la zone à contrôler. Ces sources sont par exemple une source de $^{60}$Co et une source de $^{137}$Cs.

Le dispositif comprend d'autre part un ensemble de détection E2 constitué d'une chaîne de détection qui détecte le rayonnement ayant traversé une zone à contrôler située entre l'ensemble E1 et l'ensemble E2.

La chaîne de détection comprend un détecteur 2 constitué par exemple par un bloc d'ALTUSTIP (photoscintillateur plastique à l'anthracène), entouré d'un capot de hauteur 15 cm, largeur 100 cm, épaisseur entre 4 et 10 cm ; un photomultiplicateur rapide, type 2262 ; un tiroir électronique de conditionnement des signaux type SEIN comprenant : une alimentation THT, un amplificateur de mise en forme des impulsions avec discriminateur, un circuit d'intégration ; un tiroir ampli-filtre passe-bas.

La chaîne de détection est reliée à un convertisseur analogique-digital 6 permettant de convertir les signaux analogiques reçus par le détecteur 2 en signaux digitaux. Le convertisseur 6 assure l'acquisition et le multiplexage des signaux analogiques des chaînes de détection, la conversion analogique-digital du signal du détecteur, le traitement spécifique de chaque voie de mesure, l'interface avec les commandes des moteurs électriques des systèmes de déplacement des sources. Un micro-calculateur 8 permet d'effectuer des calculs sur les valeurs digitales fournies par le convertisseur 6. L'ensemble de détection E2 est séparé de la zone à contrôler par un mur de protection épais en béton 12 qui le protège contre le rayonnement des sources faisant partie de l'ensemble E1 ainsi que contre les rayonnements provenant des matériaux contenus dans la zone à contrôler.

Dans l'exemple de réalisation représenté, la zone à contrôler est constituée par un godet 11 d'une roue de dissolveur 10. La roue de dissolveur 10 comporte douze godets présentant chacun une ouverture 9 par laquelle sont introduits les résidus nucléaires à mettre en solution. La roue 10 tourne dans le sens de la flèche 15 autour d'un axe horizontal XX et elle est disposée à l'intérieur d'une cuve de dissolveur 13

3

représentée en traits mixtes sur la figure 1. La cuve 13 est remplie d'une solution nitrique jusqu'à un niveau légèrement inférieur à l'axe de rotation XX de la roue 10. Lorsque la roue tourne dans le sens indiqué par la flèche 15, les godets pénètrent dans la solution nitrique. A la sortie du bain nitrique, il est nécessaire que le taux de dissolution souhaité soit atteint. Pour le vérifier, il est nécessaire d'effectuer un contrôle lorsque le godet sort du bain nitrique, c'est-à-dire lorsqu'il est dans la position 11a représentée en pointillé sur la figure 1. L'espace défini par cette position du godet constitue précisément la zone à contrôler. Lorsqu'un godet considéré ressort de la solution après avoir effectué une rotation d'un demi-tour, il traverse le dispositif de contrôle du taux de dissolution conforme à l'invention installé de part et d'autre de la roue 10.

L'ensemble E1 comporte deux châteaux de stockage 50 et 52 des sources de rayonnement permettant le changement de ces sources et un caisson étanche 54 entourant les châteaux 50 et 52. Deux châteaux de repli 56 et 58 sont destinés à recevoir chacun une source lorsque celle-ci n'irradie pas la zone à contrôler.

L'exemple de réalisation représenté comporte seulement deux sources d'énergie e1 et e2 différentes, par exemple une source $^{60}$Co et une source de $^{137}$Cs. Toutefois, il va de soi que l'on pourrait utiliser un nombre de sources supérieur à deux en fonction du nombre de matériaux à caractériser.

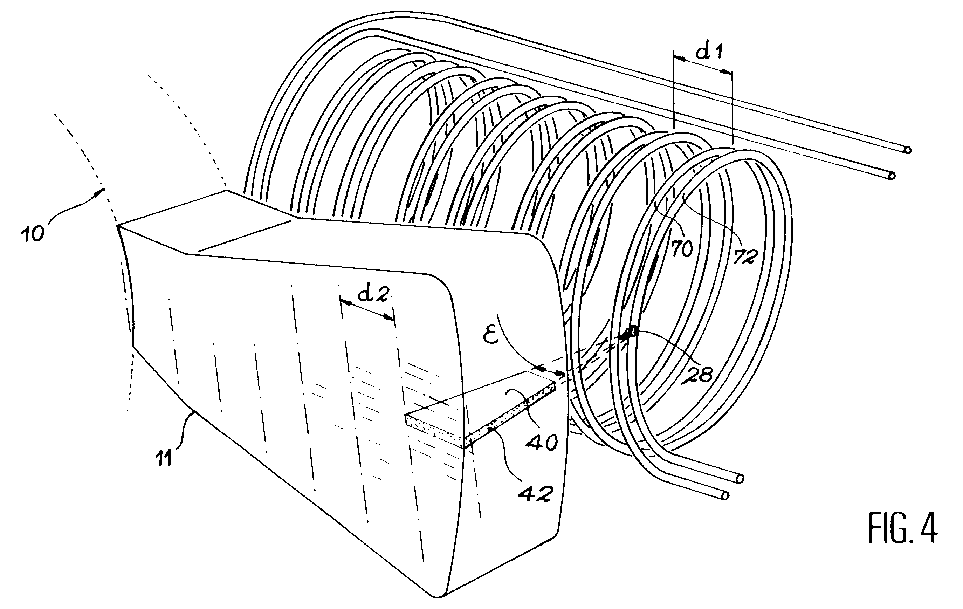

Pour chaque source, on a prévu (voir figure 4) un ensemble constitué d'un tube 70, respectivement 72, comportant une partie enroulée en spirale formant un serpentin disposé en regard de la zone à contrôler. Des moyens sont prévus pour faire circuler la source à l'intérieur de la partie en spirale avec une vitesse de déplacement bien contrôlée. Ces moyens sont constitués par exemple par un câble souple à une extrémité duquel la source est fixée et par des moyens permettant d'actionner ce câble. Ces moyens sont par exemple constitués par un système téléflex ® disponible dans le commerce. En conséquence, ce système ne sera pas décrit en détail.

L'une des extrémités du serpentin est reliée au château de repli 56, respectivement 58, tandis que l'autre extrémité du tube aboutit au château de stockage 50, 52. Le château de stockage permet le stockage de la source pour une durée longue, tandis que le château de repli permet de stocker la source en position d'attente. L'ensemble E1 comporte un deuxième dispositif identique au premier, constitué d'un tube 72 comportant une partie en spirale et dont une extrémité est reliée au château de repli 56 et dont l'autre extrémité aboutit au château de stockage 52. La spirale du tube 70 et celle du tube 72 sont disposées côte à côte de telle sorte que les trajets suivis par les deux sources peuvent être considérés comme identiques.

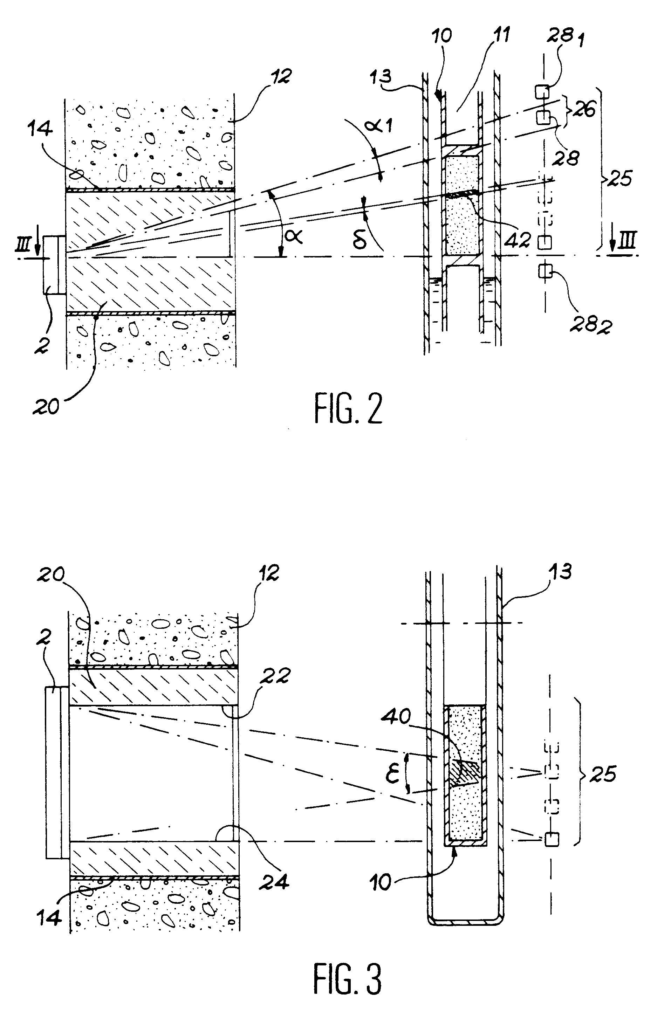

On a représenté sur la figure 2 une vue en coupe verticale du dispositif représenté sur la figure 1 et, sur la figure 3, une vue en coupe horizontale de ce même dispositif prise selon la ligne III-III de la figure 2. Les figures 2 et 3 illustrent les moyens de collimation du détecteur 2 qui permettent un maillage de la zone à contrôler 10. La collimation est constituée par un bloc de plomb 20. Les parois du bloc 20 sont recouvertes d'une couche de plomb 14. L'angle d'ouverture du bloc de plomb est désigné par $\alpha$ dans un plan vertical. Cette ouverture présente des faces 22, 24 parallèles dans un plan horizontal (voir figure 3). L'angle $\alpha$ dans le plan vertical est calculé de manière à contenir la plus grande dimension verticale du godet 11 de la roue de dissolveur 10 augmentée d'un angle $\alpha 1$ permettant de determiner une zone de recalage désignée par la référence 26 dans laquelle la source 28 peut être placée de manière à être en vue directe du détecteur 2 mais sans traverser la zone à contrôler 10.

L'angle d'ouverture $\alpha$ détermine une zone d'irradiation 25. Cette zone d'irradiation est un rectangle dont la hauteur est déterminée par l'angle d'ouverture $\alpha$ du bloc de collimation 20 et dont la dimension horizontale est déterminée par l'écartement des faces parallèles 22 et 24 de ce bloc de collimation (figure 3).

On a ainsi réalisé un dispositif comportant un détecteur collimaté pour avoir une hauteur efficace sensible de 3,5 cm et une largeur efficace sensible de 80 cm. Les dimensions transversales de la zone contrôlée du godet sont, pour une position donnée de la source, de 1 cm en hauteur et de 20 cm en longueur.

Lorsque la source 28 se trouve à l'intérieur de la zone d'irradiation 25, le détecteur reçoit le rayonnement de cette source. Au contraire, lorsque la source 28 est située en dehors de la zone d'irradiation, le rayonnement de la source est arrêté par le bloc de collimation. Les dimensions de la zone d'irradiation doivent être déterminées de manière que la zone à contrôler, c'est-à-dire le godet 11, puisse y être entièrement contenu. On a ainsi représenté sur la figure 2 une première position $28_1$ et une seconde position $28_2$ dans lesquelles la source se trouve dans une zone d'ombre, à savoir une zone d'ombre haute $28_1$ et une zone d'ombre basse $28_2$. Lorsque la source occupe une telle position, on peut mesurer le bruit de fond, c'est-à-dire les rayonnements parasites qui atteignent le détecteur et qui ne proviennent pas de la source.

La source 28 peut se déplacer aussi bien verticalement qu'horizontalement de manière à occuper successivement chacune des positions intermédiaires entre les positions $28_1$ et $28_2$. On constate que la source 28 voit, en coupe horizontale, le détecteur 2 sous un angle $\epsilon$ . Cet angle dépend de la distance entre la source et le détecteur 2 et de l'écartement des faces parallèles 22 et 24. De manière identique, la source 28 voit le détecteur 2 sous un angle d'ouverture $\delta$ dans un pla vertical. Cet angle $\delta$ dépend de la dimension vertical au fond du cône d'angle d'ouverture $\alpha$ du bloc de collimation 20 et de l'éloignement de la source du détecteur. Les angles $\epsilon$ et $\delta$ découpent dans la zone à contrôler 11 un volume délimité par deux surfaces trapézoïdales, à savoir une surface trapézoïdale 40 vue en plan sur la figure 3 et une surface trapézoïdale 42 vue en élévation sur la figure 2. Le volume découpé par la source a été représenté en trois dimensions sur la figure 4.

On a représenté à plus grande échelle sur la figure 4 les parties en spirale des tubes 70 et 72 disposés côte à côte.

Deux spires successives du tube 70, ou deux spires successives du tube 72 sont espacées l'une de l'autre d'une distance d1. Lorsqu'une source, par exemple la source 28, circule à l'intérieur du tube 72, elle balaye de bas en haut toute la hauteur du godet 1. Pour chacune des positions de la source, on enregistre sur le détecteur 2 de rayonnement $\gamma$ une acquisition correspondant au rayonnement ayant traversé la zone à contrôler. Cette acquisition est associée à la position de la source. Cette position est en effet connue puisque son déplacement s'effectue de manière contrôlée. Lorsque la source 28 arrive à la partie haute de la boucle de la spirale, elle redescend et balaye une zone verticale adjacente à la première zone.

On remarque que la largeur d2 selon une direction horizontale de la zone à balayer est légèrement supérieure à l'espacement d1 de deux spires successives des tubes 70 et 72 parce que le rayonnement de la source n'est pas parallèle mais présente un angle aigu d'ouverture $\epsilon$ , comme on l'a expliqué en référence à la figure.

Le fonctionnement du dispositif décrit en référence aux figures 1 à 5 est le suivant.

Les rayonnement gamma de la source 28 sont atténués par le milieu traversé. L'atténuation du rayonnement dépend de la densité des divers corps rencontrés.

Le flux de rayonnement gamma est détecté de l'autre côté de la zone à étudier à l'aide de la chaîne de détection comprenant le détecteur 2. Les valeurs obtenues par ce détecteur sont numérisées et stockées sur le micro-calculateur 8. Le passage de la source 28 est répété plusieurs fois pour obtenir, après moyennage des valeurs délivrées par le détecteur 2, une précision souhaitée. Chaque série de valeurs représente une exploration totale de la zone à contrôler 10. Le système mécanique replace alors la première source 28 d'énergie e1 dans un château de protection biologique et place une seconde source d'énergie e2 différente de e1 en position d'irradiation de la zone à contrôler. La source d'énergie e2 suit le même parcours que la première source de manière à déterminer un maillage de la zone à contrôler pendant le même temps de parcours. De la même manière que pour la première source, les rayonnements gamma issus de la seconde source sont atténués par le milieu traversé, l'atténuation étant différente de l'atténuation obtenue avec la première source parce que les énergies de ces sources sont différentes. En effet, les coefficients d'atténuation linéaire des différents matériaux ne varient pas dans les mêmes proportions d'une énergie à l'autre. L'écart de variation représente le signal utile et permet d'estimer la fraction de matériaux à coefficients d'absorption présents dans un matériau à coefficient d'absorption plus faible, ainsi qu'une localisation précise de ces matériau à coefficients d'absorption élevé dans la zone à contrôler.

Le chronogramme "type" des cycles peut être le suivant :
- 0 à 36s : parcours de la première source (départ de la position de repli, exploration de la surface du godet, retour à la position de repli),
- 36s à 72s : parcours de la seconde source (départ de la position de repli, exploration de la surface du godet, retour à la position de repli).

Dans un exemple de réalisation, la distance parcourue par chaque source au cours d'un cycle est de 13 m (aller + retour). La vitesse de déplacement est de 0,36 m/s.

Après irradiation par deux sources de rayonnement gamma d'énergies différentes, on obtient un système linéaire de 2 équations à 2 inconnues, ces 2 inconnues étant les masses de chacun des matériaux présents dans le dissolveur. On résout ce système d'équations linéaires au moyen du micro-calculateur 8. On obtient ainsi les masses de chacun des matériaux présents dans le dissolveur 10, ainsi qu'une localisation précise de ces matériaux, particulièrement en cas de fortes hétérogénéités, c'est-à-dire, en d'autres termes, en cas de répartition fortement inégale des matériaux présentant un coefficient d'absorption Z élevé et des matériaux présentant un coefficient d'absorption Z plus faible dans le dissolveur.

On donne ci-après un exemple de la méthode permettant ce calcul. On note :

$S(E)$     l'intensité de la source en gamma à l'énergie E émis par seconde dans l'angle solide de $4\pi$,

$d$     la distance source détecteur, en cm,

$\mu_o^i(E)$     le coefficient d'atténuation total des gammas à l'énergie E, dans les milieux fixes i (i = 1,N), traversés par les gammas (parois du dissolveur, du godet,...). Les $\mu_o^i$ sont en $cm^{-1}$,

$\ell_o^i$      les épaisseurs de milieux i traversées par les gammas de la source,

$\ell g$      largeur intérieure du godet,

$\mu_{Zr}(E)$      le coefficient d'atténuation total du zircaloy à l'énergie E, en $cm^{-1}$,

$\mu_{comb}(E)$      le coefficient d'atténuation total du combustible oxyde, à l'énergie E, en $cm^{-1}$,

f      le facteur de foisonnement des coques dans la zone contrôlée par la transmission des gammas. f est défini comme étant la fraction de volume occupé par le zircaloy dans la zone du godet contrôlé par la transmission des gammas ($0 \leq f \leq 1$). La valeur moyenne de f est de 0,12,

$\eta(E)$      l'efficacité du détecteur gamma, c'est-à-dire le nombre de coups comptés par seconde par le détecteur, pour un flux gamma à l'énergie E, incident sur le détecteur, de 1 $\gamma.cm^{-2}.s$,

x      la fraction de combustible résiduel non dissous.

Le signal du détecteur gamma, en l'absence de contribution d'émetteurs gammas parasites, et en présence de la source S(E), peut s'écrire :

$$(1) \qquad \tau_u(E,f,x) = \underbrace{\eta \, \frac{S(E)}{4\pi d^2} \, e^{-\sum\limits_{i=1}^{N} \mu_o^i(E)\,\ell_o^i}}_{\text{terme fixe } T(E)} \; \underbrace{e^{-\mu(E,\,x,\,f)\,.\,\ell g}}_{\substack{\text{Terme dépendant} \\ \text{de x et f}}}$$

où $\mu(E,x,f)$ est le coefficient total d'atténuation (en $cm^{-1}$) des gammas à l'énergie E, du mélange de coques (avec le foisonnement f) contenant éventuellement la fraction x de combustible non dissous.

$\mu(E,x,f)$ est donné par :

$$(2) \qquad \mu(E,x,f) = f\mu_{Zr}(E) + f \times 2{,}98 \; \mu_{comb}(E)$$

où le facteur 2,98 est le rapport du volume de combustible au volume de zircaloy, dans un coeur de REP ($7{,}89 \times 10^6 \, cm^3$ de combustible, $2{,}65 \times 10^6 \, cm^3$ de zircaloy).

En mesurant :

$\tau_u$ (660 keV,f,x) en présence de la source de $^{137}Cs$

et

$\tau_u$ (1,25 MeV,f,x) en présence de la source de $^{60}Co$, on peut déterminer, par un système de deux équations à deux inconnues :

- le terme de foisonnement f (ce qui n'est pasle but de la mesure),
- la fraction de combustible résiduel non dissous x dans la zone du godet contrôlée par la transmission des gammas.

En effet, en linéarisant au voisinage de $f = \bar{f}$ ($\bar{f} = 0,12$) et $x = 0$, on peut écrire :

$$(3) \quad \frac{\tau u\ (660\ keV, f, x)}{\tau u\ (660\ KeV, f, 0)} = 1 - (f - \bar{f}) \cdot \underbrace{\mu_{Zr}(660\ KeV)\ \ell^g}_{10.5}$$

$$- x\ \underbrace{(\bar{f} \cdot 2.98 \cdot \mu_{comb}\ (660\ KeV)\ \ell^g)}_{11.9}$$

$$(4) \quad \frac{\tau u\ (1.25\ MeV, f, x)}{\tau u\ (1.25\ MeV, f, 0)} = 1 - (f - \bar{f}) \cdot \underbrace{\mu_{Zr}\ (1.25\ MeV)\ \ell^g}_{7.8}$$

$$- x\ \underbrace{(\bar{f} \cdot 2.98 \cdot \mu_{comb}\ (1.25\ MeV)\ \ell^g)}_{5.8}$$

Le déterminant de ce système est différent de zéro. Ceci est lié au fait que la variation de $\mu_{Zr}(E)$ avec E est différente de celle de $\mu_{comb}(E)$ avec E, entre E = 660 keV et E,1,25 MeV : $\mu_{Zr}$ varie environ de 40% quand on passe de 1,25 MeV à 660 keV, alors que, pour la même variation de E, $\mu_{comb}$ varie environ de 100%.

De façon très imagée et simplificatrice, on peut considérer que la source $^{60}$Co sert à mesurer le foisonnement local f dans la zone contrôlée, et que la source $^{137}$Cs sert à mesurer la fraction x de combustible résiduel non dissous, dans la zone contrôlée (mais il faut avoir mesuré f pour calculer x).

On observe, à partir des expressions (3) et (4) que s'il reste 2% de combustible non dissous en position 11a, le signal en présence de la source de $^{137}$Cs varie de -24% par rapport à la valeur normale $x = 0$. On voit que la sensibilité du signal d'un détecteur à la fraction x de combustible non dissous est très grande (à titre de comparaison, une variation de 2% du foisonnement f induit une variation de -2,5% en présence de la source Cs$^{137}$ et de -1,9% en présence de la source $^{60}$Co).

En cas de mesure très bruitée, c'est-à-dire lorsque le rapport signal/bruit est faible, par exemple inférieur à $10^{-2}$, il est possible d'utiliser des traitements du signal reposant par exemple sur une transformée de Fourier et permettant d'extraire le signal utile. L'utilisation de cette technique impose un traitement différé du signal. En d'autres termes, il est nécessaire de stocker dans une mémoire l'ensemble des acquisitions obtenues lors des passages répétés de chacune des sources 1 à n, puis de les traiter ultérieurement sur un calculateur.

La méthode de transmission gamma à deux sources permet ainsi de déterminer et représenter la carte de répartition de combustible non dissous dans le godet, et bien entendu, la fraction totale de combustible non dissous dans tout le godet.

De façon simplifiée, la source de $^{137}$Cs permet de mesurer la fraction x de combustible non dissous et la méthode profite de la grande sensibilité du taux de comptage à la présence de combustible non dissous (2% de combustible non dissous présent provoquent une variation de -24% du signal par rapport à la valeur normale). La source de $^{60}$Co permet de mesurer la valeur locale de la densité de zircaloy (terme f), pour interpréter précisément la mesure précédente. Les deux sources $^{137}$Cs et $^{60}$Co sont mobiles et déplacées par un système mécanique simple, robuste et fiable, ce qui permet :

- d'explorer toute la surface du godet,
- d'alterner l'irradiation $^{137}$Cs à celle de $^{60}$Co,
- de moyenner les signaux obtenus au cours des cycles, et s'abstraire ainsi du terme de bruit dû aux émetteurs parasites.

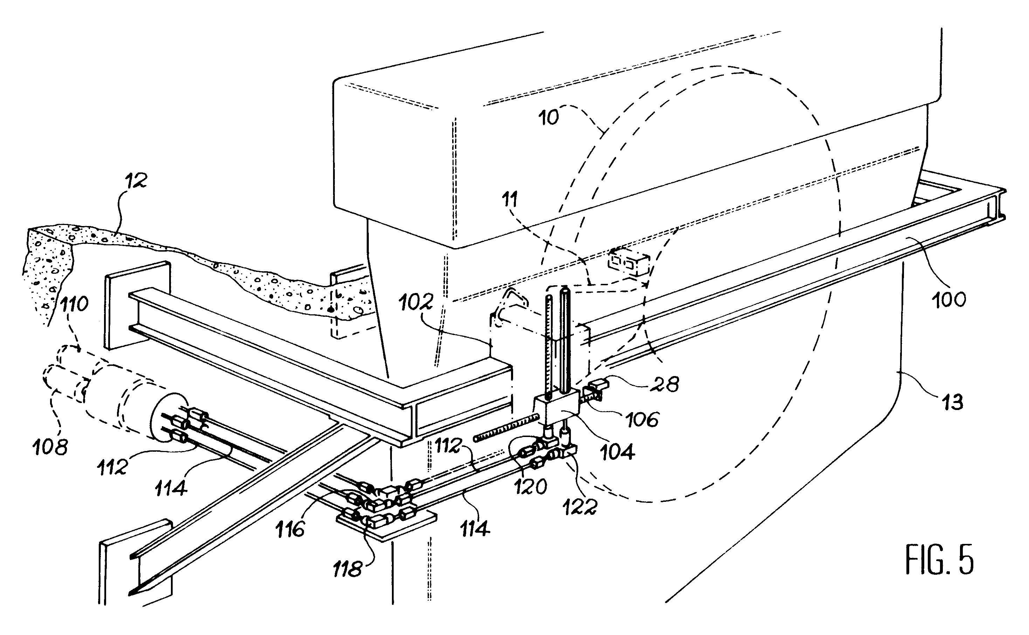

On a représenté sur la figure 5 une variante de réalisation des moyens permettant le déplacement des sources. Ces moyens son constitués par une poutre horizontale 100, sur laquelle est montée une structure de support 102. Un chariot porte-source 104 peut être déplacé verticalement en translation sur la structure 102 au moyen d'un mécanisme vis-écrou. Un bras porte-source 106 portant une source telle que 28 à son extrémité peut être déplacé en translation horizontale au moyen d'un système vis-écrou, par rapport au chariot porte-source 104.

Le dispositif de déplacement de chaque source est basé sur le principe de fonctionnement d'une table traçante. Le déplacement de chaque source se fait suivant les coordonnées "X" et "Y" et ceci alternativement, c'est-à-dire que lorsque l'on effectue une mesure avec une source, l'autre est en position de stockage. Les deux systèmes de déplacement sont identiques et montés sur un même bâti.

Les vis qui permettent la translation respectivement du chariot 104 et du bras porte-source 106 sont entraînées par deux moto-réducteurs à commande pas à pas - ce qui permet de connaître à tout instant la position de chaque source, et relier ainsi la valeur du signal mesuré sur le détecteur à la zone contrôlée du godet - 108, 110 situés de l'autre côté du mur de protection 12. Des arbres d'entraînement 112, 114 et des renvois d'angle 116, 118, 120, 122 permettent de transmettre le couple moteur des moteurs 108, 110, jusqu'aux vis d'entraînement.

Naturellement, il est nécessaire de prévoir un dispositif de ce type pour chaque source à déplacer. Par exemple, s'il y a deux sources, il sera nécessaire de prévoir deux chariots tels que 104 et deux bras porte-source 106.

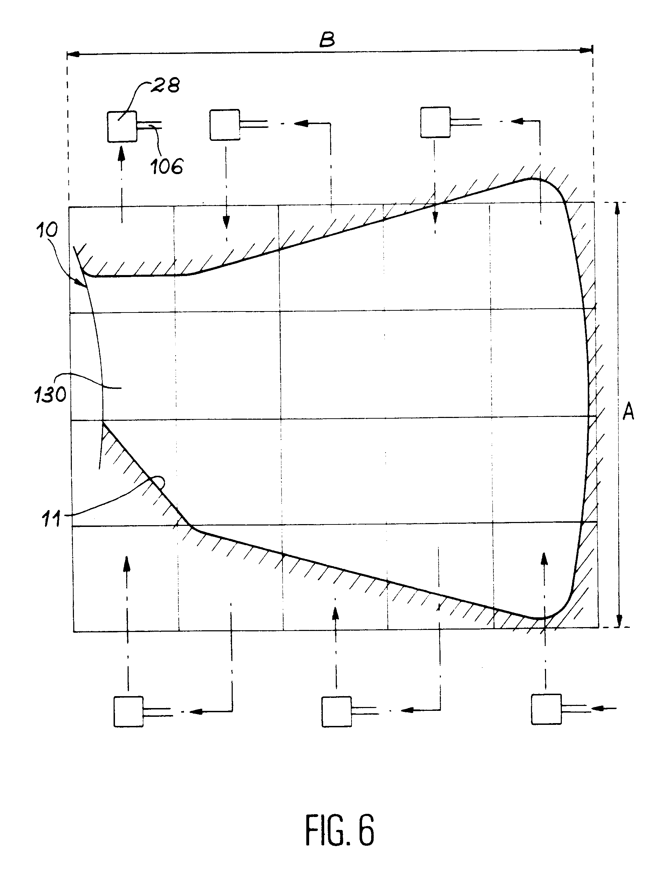

On a représenté sur la figure 6, un profil du godet 11, auquel est superposé le rectangle découpé par le collimateur 20. La dimension verticale A de ce rectangle est déterminée par l'angle d'ouverture $\alpha$ du collimateur dans le plan vertical, tandis que sa dimension horizontale B est déterminée par l'écartement des faces parallèles 22, 24. Le rectangle est divisé en mailles 130, carrées dans l'exemple de réalisation représenté. Ces mailles sont déterminées par le trajet rectangulaire du bras 106 portant la source 28. Comme on l'a expliqué précédemment, le faisceau d'angle d'ouverture $\delta$ dans un plan vertical et $\gamma$ dans un plan horizontal, découpe dans la zone à contrôler une zone en forme de pyramide à base carrée. Le déplacement du bras 106 selon un trajet rectangulaire déterminé par le chariot porte-bras 104 schématisé par des flèches sur la figure 6, découpe le maillage dans le godet 11. Comme on l'a expliqué précédemment, les acquisitions relatives à chaque maille sont stockées en mémoire. On calcule ensuite le taux de dissolution relatif à chacune de ces mailles.

**Revendications**

1. Dispositif de contrôle du taux de dissolution d'un résidu nucléaire dans une solution de dissolveur, n matériaux de densités différentes étant mis en solution dans ladite solution, comprenant :
   - n sources de rayonnement gamma,
   - un moyen détecteur (2) du rayonnement gamma,
   - un dispositif de collimation (14, 20) pour délimiter un angle solide dans lequel le rayonnement émis par lesdites n sources est perçu par le détecteur (2),
   - des moyens pour traiter le signal émis par le détecteur (2),
   - la solution contenant lesdits n matériaux étant placée entre le détecteur (2) et les sources de rayonnement gamma,
   caractérisé par des moyens (70, 72) permettant de déplacer les n sources selon un maillage de la zone à contrôler et constitués par au moins un tube (70, 72) comportant une partie en spirale placée en regard de la zone à contrôler et déterminant un maillage de cette zone, et des moyens pour faire circuler lesdites sources (28) de rayonnement gamma successivement à une vitesse déterminée et connue dans ladite spirale.

2. Dispositif selon la revendication 1, caractérisé en ce que le tube (70,72) est relié à une extrémité à un château de repli (56,58) et à une autre extrémité à un château de stockage (50,52) de la source.

3. Dispositif de contrôle du taux de dissolution d'un résidu nucléaire dans une solution de dissolveur, n matériaux de densités différentes étant mis en solution dans ladite solution, comprenant :
   - n sources de rayonnement gamma,
   - un moyen détecteur (2) du rayonnement gamma,
   - un dispositif de collimation (14, 20) pour délimiter un angle solide dans lequel le rayonnement émis par lesdites n sources est perçu par le détecteur (2),
   - des moyens pour traiter le signal émis par le détecteur (2),
   - la solution contenant lesdits n matériaux étant placée entre le détecteur (2) et les sources de rayonnement gamma,
   caractérisé par des moyens (70, 72) permettant de déplacer les n sources selon un maillage de la zone à contrôler et constitués par un chariot porte-source (104) déplacable horizontalement et comportant, pour chaque source de rayonnement radioactive (28), un bras porte-source (106) monté sur ledit chariot porte-source (104) et déplaçable verticalement sur ce chariot (106), lesdites sources de rayonnement gamma étant montées à une extrémité dudit bras porte-source (106), des moyens (108, 110) permettant d'actionner le chariot porte-source et chacun des bras porte-sources.

4. Dispositif selon la revendication 3, caractérisé en ce que les moyens pour actionner le chariot porte-source (106) sont constitués respectivement par un motoréducteur (108, 110) monté à l'extérieur d'une paroi de protection biologique (12) et des arbres de liaison (112, 114) reliant lesdits motoréducteurs (108, 110) respectivement au chariot porte-source (104) et aux bras porte-sources (106) par l'intermédiaire de renvois d'angle (116, 118).

**Claims**

1. Device for checking the dissolution rate of a nuclear residue in a dissolver solution, n materials of different densities being dissolved in said solution, comprising n gamma radiation sources, a detector means (2) of the gamma radiation, a collimating device (14, 20) for defining a solid angle, in which the radiation emitted by said n sources is seen by the detector (2), means for processing the signal emitted by the detector (2), the solution containing said n materials being placed in the detector (2) and the gamma radiation sources, characterized by means (70, 72) making it possible to displace the n sources in accordance with a mesh arrangement of the area to be checked or inspected and constituted by at least one tube (70, 72) having a spiral portion positioned facing the area to be checked and defining a mesh arrangement of said area, as well as means for circulating the said gamma radiation sources (28) successively at a given, known speed in said spiral.

2. Device according to claim 1, characterized in that the tube (70, 72) is connected at one end to a bend casket (56, 58) and by the other end to a storage casket (50, 52) of the source.

3. Device for checking the dissolution rate of a nuclear residue in a dissolver solution, n materials of different densities being dissolved in said solution, comprising n gamma radiation sources, a detector means (2) of the gamma radiation, a collimating device (14, 20) for defining a solid angle in which the radiation emitted by said n sources is seen by the detector (2), means for processing the signal emitted by the detector (2), the solution containing the n materials being placed between the detector (2) and the gamma radiation sources, characterized in that the means (70, 72) making it possible to displace the n sources in accordance with a mesh arrangement of the area to be checked or inspected and constituted by a source holder carriage (104), which is horizontally displaceable and having, for each radioactive radiation source (28), a source holder arm (106) mounted on said source holder carriage (104) and vertically displaceable on said carriage (104), said gamma radiation sources being fitted at one end of said source holder arm (106), means (108, 110) making it possible to actuate the source holder carriage and each of the source holder arms.

4. Device according to claim 3, characterized in that the means for actuating the source holder carriage (106) are respectively constituted by a geared motor (108, 110) fitted at the end of a biological protection wall (12) and connecting shafts (112, 114) connecting said geared motors (108, 110) respectively to the source holder carriage and to the source holder arms (106) by means of bevel gears (116, 118).

**Patentansprüche**

1. Vorrichtung zur Kontrolle der Auflösungsmenge eines nuklearen Abfallprodukts in einer Lösung eines Lösungsmittels, wobei n Materialien unterschiedlicher Dichten in der genannten Lösung in Lösung gebracht werden, welche aufweist:
   - n Gammastrahlungsquellen,
   - eine Detektorvorrichtung (2) für die Gammastrahlung,
   - eine Vorrichtung zum Bündeln (14, 20) zum Begrenzen eines Raumwinkels, in dem die von den n Quellen ausgesandte Strahlung von dem Detektor (2) wahrgenommen wird,
   - Vorrichtungen zum Bearbeiten des von dem Detektor (2) ausgegebenen Signals,
   - wobei die Lösung, die die n Materialien enthält, zwischen dem Detektor (2) und den Gammastrahlungsquellen angeordnet ist,
   gekennzeichnet durch Vorrichtungen (70, 72), die ermöglichen, die n Quellen entlang einem Netzwerk der zu kontrollierenden Zone zu bewegen, und die aus wenigstens einer Röhre (70, 72) bestehen, die einen Teil als Spirale gegenüber der zu kontrollierenden Zone aufweist und ein Netzwerk dieser Zone bildet, und durch Vorrichtungen zum sukzessiven Zirkulierenlassen dieser Quellen (28) von Gammastrahlung mit einer gegebenen und bekannten Geschwindigkeit in dieser Spirale.

2. Vorrichtung nach Anspruch 1, dadurch gekennzeichnet, daß die Röhre (70, 72) mit einem Ende an einem Faltbehälter (56, 58) und mit einem anderen Ende an einen Vorratsbehälter (50, 52) für die Quelle verbunden ist.

3. Vorrichtung zur Kontrolle der Auflösungsmenge eines nuklearen Abfallprodukts in einer Lösung eines Auflösungsmittels, wobei n Materialien unterschiedlicher Dichten in der genannten Lösung in Lösung gebracht werden, welche aufweist:
   - n Gammastrahlungsquellen,
   - eine Detektorvorrichtung (2) für die Gammastrahlung,
   - eine Vorrichtung zum Bündeln (14, 20) zum Begrenzen eines Raumwinkels, in dem die von den n Quellen ausgesandte Strahlung von dem Detektor (2) wahrgenommen wird,
   - Vorrichtungen zum Bearbeiten des von dem Detektor (2) ausgegebenen Signals,
   - wobei die Lösung, die die n Materialien enthält, zwischen dem Detektor (2) und den Gammastrahlungsquellen angeordnet ist,

   gekennzeichnet durch Vorrichtungen (70, 72), die ermöglichen, die n Quellen entlang einem Netzwerk der zu kontrollierenden Zone zu bewegen, und die aus einem horizontal beweglichen Quellenträgerwagen (104) bestehen, der für jede radioaktive Strahlungsquelle (28) einen Arm (106) umfaßt, der auf dem Quellenträgerwagen (104) montiert ist und vertikal auf dem Wagen beweglich ist, wobei die Gammastrahlungsquellen an einem Ende dieses Quellenträgerarms (106) montiert sind, wobei Vorrichtungen (108, 110) das Betätigen des Quellenträgerwagens und jedes der Quellenträgerarme ermöglicht.

4. Vorrichtung nach Anspruch 3, dadurch gekennzeichnet, daß die Vorrichtungen zum Betätigen des Quellenträgerwagens (106) jeweils aus einem Getriebemotor (108, 110), der am Ende einer biologischen Schutzwand (12) montiert ist, und Verbindungswellen (112, 114) bestehen, die die Getriebemotoren über Winkelgetriebe (116, 118) jeweils mit dem Quellenträgerwagen (104) und den Quellenträgerarmen (106) verbinden.

FIG. 1

FIG. 2

FIG. 3

12

FIG. 4

EP 0 341 140 B1

FIG. 5

FIG. 6